# EUROPEAN PATENT APPLICATION

(11) **EP 4 053 739 A1**
(43) Date of publication of application: **07.09.2022**
(21) Application number: 20907894.8
(22) Date of filing: 25.08.2020
(51) Int. Cl.: G06K 9/34, G06K 9/46, G06N 3/04

(54) **NEURAL NETWORK MODEL FOR IMAGE SEGMENTATION AND IMAGE SEGMENTATION METHOD THEREFOR**

(30) Priority: 22.12.2019 CN 201911332559
(71) Applicant: Inspur Electronic Information Industry Co., Ltd, Jinan, Shandong 250101 (CN)
(72) Inventor: WANG, Li, Jinan, Shandong 250101 (CN); GUO, Zhenhua, Jinan, Shandong 250101 (CN); ZHAO, Yaqian, Jinan, Shandong 250101 (CN)
(74) Representative: Groth & Co. KB
(86) International application number: PCT/CN2020/110983
(87) International publication number: WO 2021/128896

(57) **Abstract**

A neural network model for image segmentation, an image segmentation method therefor and device thereof, and a readable storage medium. The model comprises an intelligent selection module, and the intelligent selection module further comprises a feature extraction unit and an intelligent selection unit. Since the feature extraction unit uses multi-scale dilated convolution to obtain information of different scales of an input feature map, a large quantity of diverse feature information is provided for later feature screening. In addition, the intelligent selection unit trains a weight value, and performs intelligent screening on an input feature map channel according to the size of the weight value. Therefore, the intelligent selection module can ensure segmentation accuracy while reducing the number of parameters and the amount of calculation. Therefore, by using the described intelligent selection module, the neural network model of the present application can quickly extract an effective feature of an image; moreover, the amount of calculation is small and model parameters are few, and the model is applicable to a mobile terminal.

## Description

### CROSS-REFERENCE TO RELATED APPLICATIONS

This application claims priority to Chinese Patent Application No. 201911332559.3, filed with the Chinese Patent Office on December 22, 2019 and entitled "NEURAL NETWORK MODEL FOR IMAGE SEGMENTATION AND IMAGE SEGMENTATION METHOD THEREFOR." The above-referenced applications are incorporated herein by reference in their entirety.

### TECHNICAL FIELD

The present application relates to the field of computer vision technologies, and in particular, to a neural network model for image segmentation, an image segmentation method and device, and a readable storage medium.

### BACKGROUND

At present, it has become a hot topic to use deep learning to solve problems in the field of computer vision, such as image classification, image segmentation and object detection, and great success has been achieved.

An image segmentation technology is an important research direction in the field of computer vision and an important part of image semantic understanding. Image segmentation refers to a process of dividing an image into several similar regions. In recent years, the image segmentation technology has developed by leaps and bounds. Related technologies, such as scene object segmentation, human front background segmentation, human face and human body parsing, and 3D reconstruction have been widely applied in unmanned driving, augmented reality, security monitoring and other industries.

In recent years, a lot of excellent convolutional neural network models have emerged, but these models are generally very large in computation and size, which can only be used in server terminals and requires high-performance GPU acceleration to run, and cannot be run in mobile devices, such as smart phones.

Mobile devices also have a huge demand for deep learning. Therefore, how to design a lightweight convolutional neural network model applicable to the mobile devices to achieve image segmentation is an urgent problem to be solved by those skilled in the art.

### SUMMARY

An objective of the present application is to provide a neural network model for image segmentation, an image segmentation method and device, and a readable storage medium to solve the problem that a current neural network model for image segmentation has a large amount of calculation and a large number of model parameters and cannot run on mobile devices, such as mobile phones. Specific solutions are as follows.

In a first aspect, the present application provides a neural network model for image segmentation, including: a feature extraction module, an intelligent selection module, an up-sampling module and a classification module, wherein the intelligent selection module includes a feature extraction unit, a normalization unit, an intelligent selection unit, and an output unit;
the feature extraction module is configured to extract an original feature map of a target image;
the feature extraction unit is configured to perform feature extractionon the original feature map of the target image by using multi-scale dilated convolution, and splice a plurality of feature maps extracted to obtain an output feature map of the feature extraction unit;
the normalization unit is configured to normalize and non-linearly map the output feature map of the feature extraction unit to obtain an output feature map of the normalization unit;
the intelligent selection unit is configured to determine a first weight value of each channel in the output feature map of the normalization unit, the first weight value being configured to represent a contribution of the channel to accuracy of image segmentation; screen a preset number of target channels with maximum first weight values from the output feature map of the normalization unit; and weight the target channels according to the first weight value to obtain an output feature map of the intelligent selection unit;
the output unit is configured to add the output feature map of the intelligent selection unit and the original feature map of the target image to obtain a target feature map;
the up-sampling module is configured to up-sample the target feature map; and
the classification module is configured to generate an image segmentation result of the target image according to a feature map obtained by up-sampling.

Preferably, the intelligent selection unit is specifically configured to: screen the preset number of target channels with the maximum first weight values from the output feature map of the normalization unit; linearly weight the first weight value of each target channel according to a pre-trained global weighted value to obtain a second weight value of the target channel; and weight the target channel according to the second weight value to obtain the output feature map of the intelligent selection unit.

Preferably, the intelligent selection module includes a down-sampling intelligent selection module, and an intelligent selection unit of the down-sampling intelligent selection module is configured to screen a first preset number of target channels with maximum first weight values from the output feature map of the normalization unit, wherein the first preset number is a number determined according to a convolution step and a number of channels of the original feature map of the target image.

Preferably, the intelligent selection module includes a feature-retention intelligent selection module, and an intelligent selection unit of the feature-retention intelligent selection module is configured to screen a second preset number of target channels with maximum first weight values from the output feature map of the normalization unit, wherein the second preset number is equal to the number of channels of the original feature map of the target image.

Preferably, the intelligent selection unit is specifically configured to: sequentially perform an average pooling operation, a full connection operation, a non-linear mapping operation, a full connection operation, and a normalization operation on the output feature map of the normalization unit to obtain the first weight value of each channel in the output feature map of the normalization unit.

Preferably, the neural network model includes a plurality of intelligent selection modules mutually connected in series.

Preferably, the feature extraction module includes a first feature extraction module and a second feature extraction module, and the intelligent selection module includes a first intelligent selection module and a second intelligent selection module; and
the first feature extraction module is connected in series to a first preset number of first intelligent selection modules mutually connected in series, and the second feature extraction module and the first intelligent selection module are outputted, through a connection module, to a second preset number of second intelligent selection modules mutually connected in series.

In a second aspect, the present application provides an image segmentation method implemented based on the neural network model for image segmentation as described above, including:
acquiring a target image to be segmented; and
inputting the target image to the neural network model to obtain an image segmentation result.

In a third aspect, the present application provides an image segmentation device, including:
a memory configured to store a computer program; and
a processor configured to execute the computer program to perform the image segmentation method as described above.

In a fourth aspect, the present application provides a readable storage medium, wherein the readable storage medium is configured to store a computer program, and the computer program, when executed by a processor, performs the image segmentation method as described above.

A neural network model for image segmentation according to the present application includes: a feature extraction module, an intelligent selection module, an up-sampling module and a classification module. The intelligent selection module includes a feature extraction unit, a normalization unit, an intelligent selection unit, and an output unit. The feature extraction unit of the intelligent selection module uses multi-scale dilated convolution to obtain information of different scales of an input feature map and splice feature information of multiple scales together, so as to provide a large quantity of diverse feature information for later feature screening. In addition, the intelligent selection unit of the intelligent selection module trains a weight value representing the contribution of the channel to the accuracy of image segmentation, and according to the sizes of the weight values, discards the channels with smaller weight values and retains the channels with larger weight values, thereby realizing intelligent selection on an input feature map channel. Thus, the intelligent selection module can fuse multi-scale information and extract rich features and can also extract effective channels to reduce the number of parameters and the amount of calculation while ensuring segmentation accuracy. Therefore, by using the described intelligent selection module, the neural network model of the present application can quickly extract an effective feature of an image and has a small amount of calculation and few model parameters, which is a lightweight neural network model for image segmentation applicable to a mobile terminal.

In addition, the present application further provides an image segmentation method and device, and a readable storage medium, with technical effects corresponding to those of the above neural network model, which are not repeated here.

### BRIEF DESCRIPTION OF DRAWINGS

In order to more clearly illustrate the technical solutions in embodiments of the present application or a prior art, the accompanying drawings used in the description of the embodiments or the prior art will be briefly introduced below. It is apparent that, the accompanying drawings in the following description are only some embodiments of the present application, and other drawings can be obtained by those of ordinary skill in the art from the provided drawings without creative efforts.
FIG. 1 is a schematic structural diagram of a first embodiment of a neural network model for image segmentation according to the present application;
FIG. 2 is a schematic structural diagram of an intelligent selection module in the first embodiment of the neural network model for image segmentation according to the present application;
FIG. 3 is a first schematic structural diagram of a second embodiment of a neural network model for image segmentation according to the present application; and
FIG. 4 is a second schematic structural diagram of the second embodiment of the neural network model for image segmentation according to the present application.

### DESCRIPTION OF EMBODIMENTS

To enable those skilled in the art to better understand the solutions of the present application, the present application is described in further detail below with reference to the accompanying drawings and specific implementations. Apparently, the described embodiments are merely some of rather than all of the embodiments of the present application. All other embodiments acquired by those of ordinary skill in the art without creative efforts based on the embodiments in the present application fall within the protection scope of the present application.

At present, a convolutional neural network model is used in all processing software related to the field of computer vision, while a mainstream convolutional neural network model has a large amount of calculation and a large size that is often hundreds of megabytes, so that it is difficult to deploy such a convolutional neural network model to embedded systems with limited hardware resources. In addition, for a large convolutional neural network, the running of the large convolutional neural network requires a large memory bandwidth for reading and calculation and requires many floating point operations. Moreover, the large network cannot be completely placed in a DRAM and requires more DRAM access, which consumes a lot of power. At the same time, APP software is downloaded and updated through an APP store. For such APP software, the size of the software is very important, since if the APP software is too large, the download is too slow, user experience may be affected accordingly, and many users may not download or update such software.

Thus, the limitation of computing resources, the problem of energy consumption of the calculation, and the problem that the larger the terminal software, the worse the user experience have caused great obstacles to large-scale applications of the convolutional neural network model on mobile devices, such as smart phones.

With respect to the above problems, the present application provides a neural network model for image segmentation, an image segmentation method and device, and a readable storage medium to fuse multi-scale information to acquire rich features and extract effective channels through an intelligent selection module in the neural network model, which effectively reduces the number of parameters and the amount of calculation while ensuring segmentation accuracy. Therefore, the neural network model of the present application can quickly extract an effective feature of an image and has a small amount of calculation and few model parameters, which is a lightweight neural network model applicable to a mobile terminal.

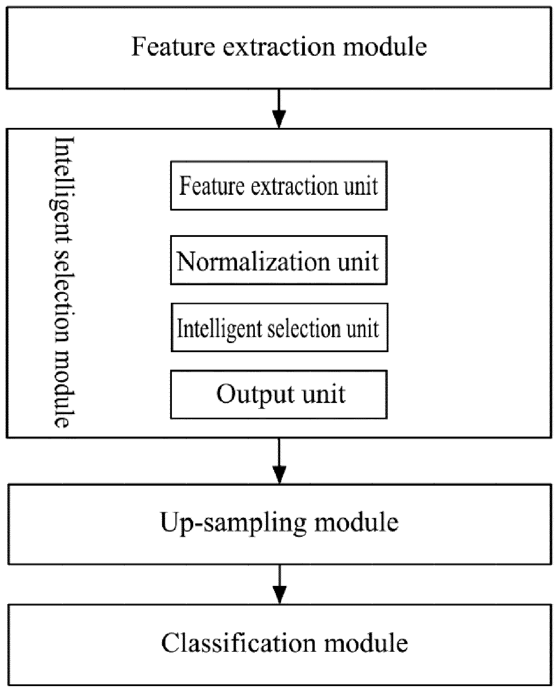

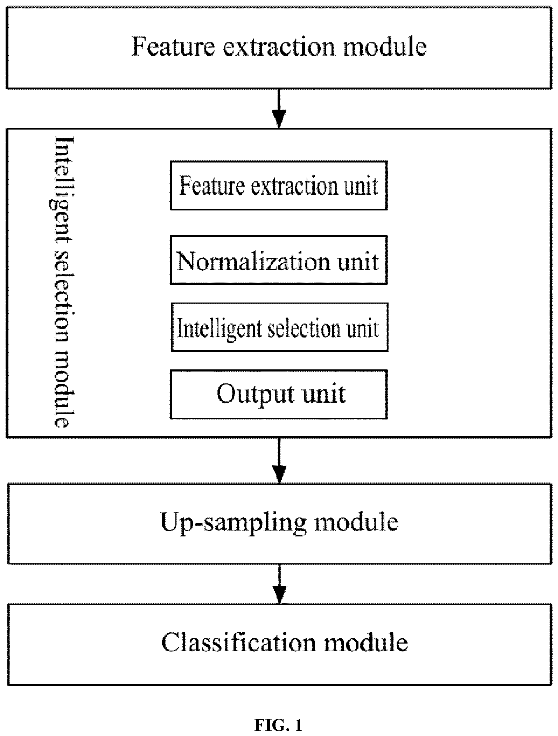

A first embodiment of a neural network model for image segmentation according to the present application is introduced below. Referring to FIG. 1, the neural network model for image segmentation according to the first embodiment includes: a feature extraction module, an intelligent selection module, an up-sampling module and a classification module, wherein the intelligent selection module includes a feature extraction unit, a normalization unit, an intelligent selection unit, and an output unit.

The feature extraction module is configured to extract an original feature map of a target image.

The feature extraction unit is configured to perform feature extractionon the original feature map of the target image by using multi-scale dilated convolution, and splice a plurality of feature maps extracted to obtain an output feature map of the feature extraction unit.

The normalization unit is configured to normalize and non-linearly map the output feature map of the feature extraction unit to obtain an output feature map of the normalization unit.

The intelligent selection unit is configured to determine a first weight value of each channel in the output feature map of the normalization unit, the first weight value being configured to represent a contribution of the channel to accuracy of image segmentation; screen a preset number of target channels with maximum first weight values from the output feature map of the normalization unit; and weight the target channels according to the first weight value to obtain an output feature map of the intelligent selection unit.

The output unit is configured to add the output feature map of the intelligent selection unit and the original feature map of the target image to obtain a target feature map.

The up-sampling module is configured to up-sample the target feature map.

The classification module is configured to generate an image segmentation result of the target image according to a feature map obtained by up-sampling.

Since the intelligent selection module is one of the cores of the present application, the intelligent selection module is introduced in detail below.

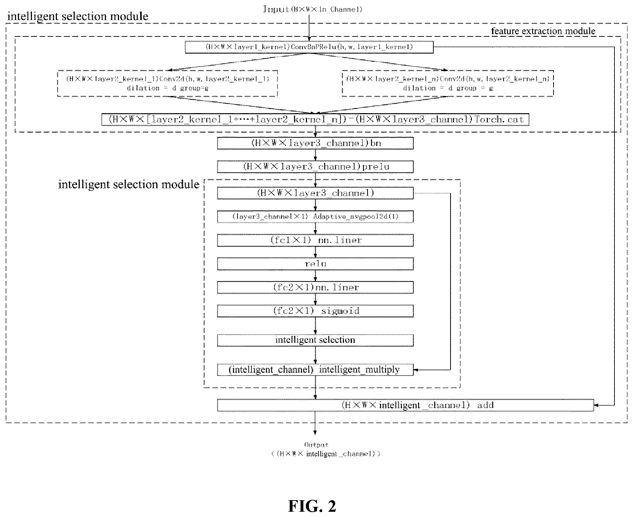

As shown in FIG. 2, the structure in the dotted box where the intelligent selection module is annotated is a detailed structure of the intelligent selection module, each row is called a layer, and there are a total of 14 layers. The structure in the dotted box where the feature extraction module is annotated is the feature extraction unit, the structure in the dotted box where the intelligent selection module is annotated is the intelligent selection unit, the structure between the feature extraction unit and the intelligent selection unit is the normalization unit, and the structure behind the intelligent selection unit is the output unit.

Referring to FIG. 2, the input feature map of the intelligent selection module is at a scale of H×W×In_Channel, where H and W denote height and width, and In_channel denotes a number of channels of the input feature map. In practical applications, the input feature map may also be at a scale of batchsize×H×W×In_Channel, where batchsize denotes a number of input images. The present embodiment is described by taking batchsize=1 as an example. It is to be understood that, in practical applications, the batchsize may be set according to an actual requirement, for example, which may be set to 2, 4, or the like.

A layer1 network of the intelligent selection module is a ConvBnPrelu layer. This layer represents integration of Conv (convolutional layer)+Bn (batchNorm layer)+Prelu layer or (relu layer). The ConvBnPrelu layer has an output dimension of (H×W×layer1_kernel).

Layer 2 is a network composed of a plurality of convolutional layers, including n convolutional layers. In the present embodiment, the layers are respectively named as: Layer2_kernel_1, ..., layer2_kernel_n. Convolution of the layer has two characteristics, of which one is that dilated convolution is adopted for convolution kernels, and the other is that group convolution is used in the present embodiment to reduce the number of parameters. The experience of feature maps of different scales can be improved by dilated convolution of different scales, and the classification accuracy can be improved. The number of parameters and the amount of calculation can be reduced by the group convolution, so as to ensure that the model can be run on mobile devices.

Layer 3 is a concat layer (concatenate), that is, a connection layer. The layer is configured to splice output results of the convolutional layers in the previous layer together. Therefore, the input feature map has sizes of H×W×layer2_kernel_1, H×W×layer2_kernel_2, ..., H×W×layer2_kernel_n, while the output feature map has a size of H×W×(layer2_kernel_1+layer2_kernel_2, ..., +layer2_kernel_n). That is, the width and the height of the input feature map remain unchanged, and the number of channels of the feature map is added. For ease of description, in the present embodiment, (layer2_kernel_1+layer2_kernel_2, ..., +layer2_kernel_n) is named layer3, that is, (layer2_kernel_1+layer2_kernel_2, ..., +layer2_kernel_n)=layer3.

Layer 4 is a bn layer (batchnorm), configured to normalize the input feature map.

Layer 5 is a prelu layer, configured to non-linearly map the input feature map. After passing through Layer 4 and Layer 5, the output feature map is at a scale of H×W×layer3. That is, the bn layer and the prelu layer do not change the scale of the feature map. Here's a brief introduction to Prelu, i.e., Parametric Rectified Linear Unit, which is an activation function. Prelu(x)=max(0,x)+a^{∗}min(0,x), where a denotes a learnable parameter.

Layer 6 to Layer 13 are introduced below, which are synthesized together and referred to as a dropChannel layer in the present embodiment.

As described above, the output feature map of Layer 5 has a size of H×W×layer3. The layer3 is too large and is not conducive to calculation and storage by the mobile device. Therefore, in the present embodiment, the dropChannel layer is intended to screen the channels to eliminate the channels of low value and retain the channels good for segmentation. Specifically, a weight is assigned to each channel, so that the channels more conducive to segmentation obtain larger weight values, and the layers not conducive to improving segmentation accuracy obtain smaller weight values. The dropChannel layer is described in detail below.

Layer 6 mainly transfers the feature map, and is configured to connect Layer 5 and Layer 7 and connect Layer 5 and Layer 13.

Layer 7 is an avepool layer, which is marked as adaptive_avepool layer in the figure. The purpose is to averagely pool data for each channel of the input feature map. For example, the input is H×W×layer3, and the output is 1×layer3 after average pooling. Each H×W feature map is averaged to obtain a number by avepooling. Therefore, the output of the layer is layer3×1, which is a vector.

Layer 8 is a full connection layer, configured to linearly map the input of layer3×1. Since a full connection function is implemented with nn.liner in pytorch, it is named nn.liner in the present embodiment, which may certainly also be named otherwise, such as a full connection layer. The output of the layer is fc1. In practical applications, a dimension of an output feature may be changed by changing a number of neurons in the full connection layer.

Layer 9 is a relu layer, configured to non-linearly map the input feature map. The output of the layer is fc1.

Layer 10 is a full connection layer, configured to linearly map the input feature map again. The output of the layer is fc2 (fc2 is a vector, and the dimension is fc2×1). fc2=layer3, so as to ensure that the output of the layer is consistent with the number of channels in the feature map.

Layer 11 is a sigmoid layer, which normalizes the input feature map, so that the dimension of the input feature map is normalized to [0,1]. The output of the layer is fc2.

Layer 12 is an intelligent selection layer. The layer is intended to sort and select the input feature map. Specific implementation involves: sorting the output of Layer 11 in descending order, and recording values of elements in fc2 and locations thereof. The location represents the layer. The layer has an output dimension of fc2×2. The first column represents weight values, and the second column represents locations of the weight values, as shown in Table 1. Input feature weight values and sorts of locations are obtained by sorting.

**Table 1**

| Weight | index |
|---|---|
| 0.98 | 7 |
| 0.85 | 4 |

Since fc2==layer3, the value of fc2 is very large (the reason is that layers are connected at Layer 3, making the number of channels in the feature map explode, which is not conducive to the deployment of the model to a mobile device). At Layer 12, weight value sorting and location information of each channel are outputted for later channel screening.

Layer 13 is an intelligent Multiply layer. The layer is intended to intelligently output a feature map helpful for segmentation. The layer has two inputs, of which one is the output feature map of Layer 5, with a dimension of H×W×layer3, and the other is the output of Layer 12, with a dimension of fc2×2. The principle of the layer is described in detail below and is not introduced herein.

Layer 14 is an add layer, configured to add the output feature maps of Layer 13 and Layer 6. A feature map finally obtained is the output feature map of the intelligent selection module.

In particular, the number of channels in the output feature map of Layer 13 may be set according to an actual requirement, which may be specifically divided into two types: the number of channels in the output feature map is equal to the number of channels in the input feature map of the intelligent selection module, and the number of channels in the output feature map is not equal to the number of channels in the input feature map of the intelligent selection module.

More specifically, in practical applications, the intelligent selection module may be divided into the following two types according to a network requirement: a down-sampling intelligent selection module and a feature-retention intelligent selection module. The number of channels in the output feature map of the down-sampling intelligent selection module is greater than the number of channels in the input feature map, while the number of channels in the output feature map of the feature-retention intelligent selection module is equal to the number of channels in the input feature map.

Layer 13 of the intelligent selection module retains, according to a sorting result of fc2, k channels with large weight values in fc2 and discards the other layers, achieving channel simplification. The principle of this operation involves: selecting, through a training result of a neural network, channels more conducive to segmentation, retaining same, and discarding channels not conducive to segmentation, so as to reduce the number of parameters and the amount of calculation. Specific steps are as follows.

In S11, an output feature map of Layer 5 -> feature_in =H×W×layer3 is acquired.

In S12, output of Layer 12 ->weight_in=fc2×2 is acquired.

In S13, maximum first k input weights of weight in are selected, denoted as weight_valuable.

In S14, an index value corresponding to weight_valuable is acquired, denoted as index_valuable.

In S15, channels corresponding to feature_in are selected according to index_valuable. That is, channels where the index values in feature in are located are extracted. A total of k channels are extracted. After the extraction, a dimension of the output feature map is H×W× k, denoted as channel_valuable.

In S16, weight_valuable is multiplied with the corresponding channel_valuable.

Here is an explanation, weight valuable has a dimension of k×1, and channel_valuable has a dimension of H×W×k. Each element of weight_valuable is taken and multiplied with a matrix (H×W dimensions) of channels corresponding to channel_valuable. The multiplication means weight valuable multiplied by each element in the H×W-dimensional matrix. Weight_valuable is a result outputted by Layer 11. Layer 11 is a softmax layer. After passing through the layer, weight_valuable has a value between [0,1]. In the present embodiment, a corresponding weight is assigned to the output feature map feature in of Layer 5 through such valuable weight values.

As a preferred implementation, in the present embodiment, a new value G is introduced herein, which is named a global weighted value. The value is positive, and weight_valuable may be linearly zoomed in or out. That is, the first weight value is transformed into the second weight value through the linear weighting operation described above. The global weighted value is obtained through training by the neural network. With the value, the value of weight valuable may not be limited to a range of [0,1], which may be greater than 1 or less than 1, but has to be greater than 0. The introduction of the global weighted value enables large weights, i.e., weight values greater than 1, to be assigned to better channels. That is, intelligent_channel=(G×weight_valuable)×channel_valuable.

Based on the above, the output feature map of Layer 13 has a dimension of H×W×k, which is named intelligent_channel in the present embodiment. When k=In_channel, the intelligent selection module in this case is the feature-retention intelligent selection module. When k=stride×In_channel and stride>1, the intelligent selection module in this case is the down-sampling intelligent selection module, where stride denotes a convolution step.

The neural network model for image segmentation according to the present embodiment includes: a feature extraction module, an intelligent selection module, an up-sampling module and a classification module. The intelligent selection module includes a feature extraction unit, a normalization unit, an intelligent selection unit, and an output unit. The neural network model has at least the following advantages.

Firstly, the intelligent selection module uses dilated convolution of different scales to fuse feature map information of different scales to obtain richer feature maps, so as to provide a large quantity of feature information for later feature screening.

Secondly, since multi-scale dilated convolution is adopted, that is, a plurality of convolution branches of different scales are used to perform convolution on the same input feature map, the number of parameters and the amount of calculation are increased. In order to reduce the number of parameters and the amount of calculation, as a preferred implementation, in the present application, group convolution is adopted in each branch, which greatly reduces the number of parameters and has little loss of accuracy.

Thirdly, in order to further reduce the number of parameters and the number of channels in the feature map, the intelligent selection module intelligently selects input feature map channels, trains a weight value to indicate which input feature map channels are more conducive to future segmentation, and at the same time, according to the sizes of the weight values, discards the channels with smaller weight values and retains the channels with larger weight values, thereby reducing the number of parameters and the amount of calculation while ensuring segmentation accuracy.

Fourthly, the intelligent selection module further trains a global weighted value, so as to linearly weight the weight value of each channel again to increase or suppress an expression range of the weight value of each channel, so that it is not limited to the range of [0,1].

Finally, with the use of the intelligent selection module in the neural network model for image segmentation, the accuracy of image segmentation can be maintained in the case of few model parameters, which realizes a lightweight neural network model applicable to a mobile device, configured for image segmentation.

A second embodiment of a neural network model for image segmentation according to the present application is introduced in detail below. The intelligent selection module is introduced in detail in the first embodiment based on a general structure of an image segmentation model. In the second embodiment, a specific image segmentation model using an intelligent selection module is introduced by taking a specific network structure as an example.

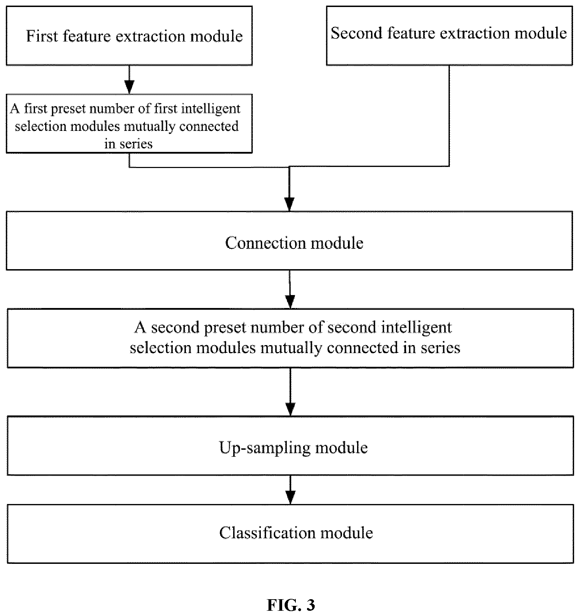

Referring to FIG. 3, in the second embodiment, the feature extraction module includes a first feature extraction module and a second feature extraction module, and the intelligent selection module includes a first intelligent selection module and a second intelligent selection module. The first feature extraction module is connected in series to a first preset number of first intelligent selection modules mutually connected in series, and the second feature extraction module and the first intelligent selection module are outputted, through a connection module, to a second preset number of second intelligent selection modules mutually connected in series. The second intelligent selection module is successively connected to the up-sampling module and the classification module subsequently.

It is to be noted that the division of the intelligent selection module into a first intelligent selection module and a second intelligent selection module is only intended to facilitate the description of the structure of the entire neural network model. In the present embodiment, the intelligent selection modules have a same structure (as the description of the intelligent selection module in the first embodiment), but parameters of the intelligent selection modules may be different. Specific parameter setting will be described in detail hereinafter.

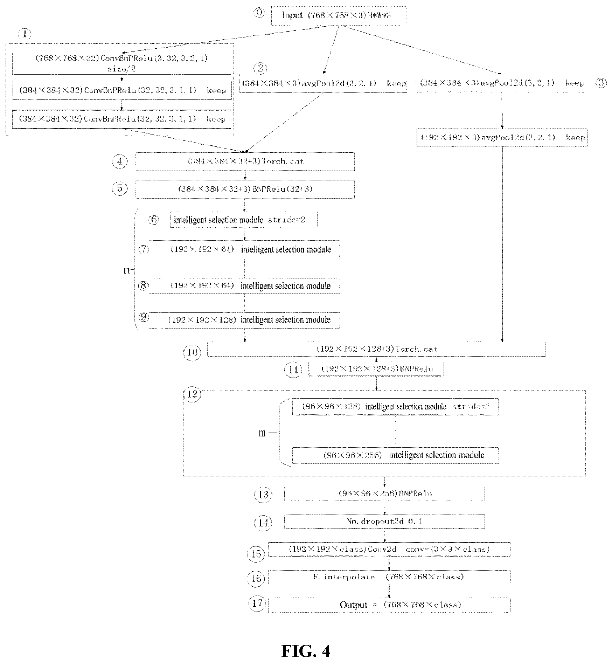

A detailed structure of the neural network model according to the second embodiment is as shown in FIG. 4. Each network structure is described below in order of numbers of circles in FIG. 4.
1. Firstly, an input to the network is as shown by Circle 0, and an input dimension is H×W×3, which, as a specific implementation, may be set to 768×768×3 in the present embodiment.
2. An input image first enters Circle 1. ConvBnPRelu represents a network composed of Conv (convolutional layer), a BatchNormal (Bn) layer and a Relu layer. ConvBnPRelu (3,32,3,2,1) represents a network formed by convolutional layers with an input of 3 channels, an output of 32 channels, a convolution kernel at a scale of 3×3, a stride of 2, and a padding of 1.

Specifically, after passing through the first ConvBnPRelu layer, the feature map has a width and a height reduced by half, and the output of the layer is 384×384×32. After the second ConvBnPRelu layer is passed, the scale of the feature map remains unchanged, and the output of the layer is 384×384×32. After the third ConvBnPRelu layer is passed, the scale of the feature map remains unchanged, and the output of the layer is 384×384×32.
3. Circle 4 is entered, and results of Circle 1 and Circle 2 are concatenated (channel superposition) together. Circle 2 is a pooling layer, and the convolution step stride=2, which down-samples the original image twice. Circle 4 has an output dimension of 384×384×35.
4. Circle 5, i.e., a BN+Prelu layer, is entered. In the layer, the dimension of the feature map is unchanged, and the output feature map has a dimension of 384×384×35.
5. Circle 6 is entered, and the intelligent selection module obtains more features by dilated convolution and multi-branch channel fusion, which reduces the number of parameters and the amount of calculation by intelligently selecting an optimal channel. The module can extract more concise and excellent features. The stride scale of the first convolutional layer of the intelligent selection module shown in Circle 6 is 2, so the scales of the width and the height of the feature map may be reduced to half of the original scales. The output feature map of Circle 6 has a dimension of 192× 192×64, where 64 represents the number of output channels.
6. Circle 7 is entered, the stride scale of the first convolutional layer in the intelligent selection module is 1, the scale of the feature map is unchanged, and the output feature map of Circle 7 has a dimension of 192×192×64.
7. The intelligent selection module in Circle 8 is the same as that in Circle 7. The intelligent selection modules are connected in series, effective segmentation features are extracted by a superimposed layer, and the output feature map of Circle 8 has a dimension of 192× 192×64.
8. The intelligent selection module in Circle 9 may increase the number of channels. By specifying the number of channels selected, the number of output channels can be changed. In the present embodiment, the number of output channels is set to 128, and the output feature map passing through Circle 9 has a dimension of 192×192×128.
9. Circle 10 is a concat module. The module in Circle 10 has the same function as the module in Circle 4. In Circle 10, output results of Circle 9 and Circle 3 are superimposed together according to channel dimensions. In Circle 10, the output dimension is 192× 192×(128+3).
10. Circle 11 is a BN+Prelu module. The feature map passing through the module has a dimension of 192× 192×(128+3).
11. Circle 12 represents superimposition of a plurality of intelligent selection modules. Similar to the intelligent selection module described above, the first intelligent selection module reduces the width and the height of the feature map by setting a stride (convolution step) of the convolutional layer. The number of channels of the final output feature map is changed through the final intelligent selection module, and other intelligent selection modules do not change the dimension of the feature map inputted thereto. The dimension of the output feature map after passing through Circle 12 is changed to 96×96×256.
12. Circle 13 is a BN+Prelu module. The feature map passing through the module has a dimension of 96×96×256.
13. Circle 14 is a dropout2d module, which is a dropout layer. The feature map passing through the layer has a dimension of 96×96×256.
14. Circle 15 is a convolutional layer conv2d, the scale of the convolution kernel is set to 3×3, and the channel of the convolution kernel is class, where class represents a class of a segmentation training database sample, that is, a segmentation class.
15. Circle 16 is a non-linear interpolate layer. After passing through the layer, the input feature map is interpolated to the size of the original input feature map, and the interpolation is performed in an8-time size. The output feature map of the layer has a size of 768×768×class. Each class channel represents a segmentation class.
16. Circle 17 represents a final output. An output size is 768×768×class.

The following is an introduction to an embodiment of an image segmentation method according to the present application. The image segmentation method described below and the neural network model for image segmentation described above may be referred to each other.

The image segmentation method is implemented based on the neural network model for image segmentation as described above, including the following steps: acquiring a target image to be segmented; and inputting the target image to the neural network model to obtain an image segmentation result.

Specifically, the image segmentation method includes the following steps.

In S51, an original feature map of a target image is extracted.

In S52, the feature extraction unit is used to perform feature extraction on the original feature map of the target image by using multi-scale dilated convolution, and splice a plurality of feature maps extracted to obtain an output feature map of the feature extraction unit.

In S53, the normalization unit is used to normalize and non-linearly map the output feature map of the feature extraction unit to obtain an output feature map of the normalization unit.

In S54, the intelligent selection unit is used to determine a first weight value of each channel in the output feature map of the normalization unit, the first weight value being configured to represent a contribution of the channel to accuracy of image segmentation; screen a preset number of target channels with maximum first weight values from the output feature map of the normalization unit; and weight the target channels according to the first weight value to obtain an output feature map of the intelligent selection unit.

In S55, the output unit is used to add the output feature map of the intelligent selection unit and the original feature map of the target image to obtain a target feature map.

In S56, up-sampling is performed on the target feature map.

In S57, an image segmentation result of the target image is generated according to an output feature map obtained by up-sampling.

The image segmentation method of the present embodiment is implemented based on the neural network model for image segmentation as described above. Therefore, specific implementations of the method may be obtained with reference to the part of the embodiment of the forging neural network model for image segmentation, and the technical effect thereof corresponds to that of the neural network model, which is not repeated here.

In addition, the present application provides an image segmentation device, including:
a memory configured to store a computer program; and
a processor configured to execute the computer program to perform the image segmentation method as described above.

Finally, the present application provides a readable storage medium. The readable storage medium is configured to store a computer program, and the computer program, when executed by a processor, performs the image segmentation method as described above.

The embodiments in the specification are all described in a progressive manner. Each embodiment focuses on a difference from other embodiments. Same and similar parts among the embodiments may be referred to one another. The apparatus disclosed in the embodiment corresponds to the method disclosed in the embodiment, so the description thereof is relatively simple. Related parts may be obtained with reference to the description in the method embodiments.

Steps of the methods or algorithms described in the embodiments disclosed herein may be implemented by hardware, a software module executed by a processor, or a combination thereof. The software module may be configured in a random access memory (RAM), a memory, a read-only memory (ROM), an electrically programmable ROM, an electrically erasable programmable ROM, a register, a hard disk, a removable disk, a CD-ROM, or a storage medium in any other forms well-known in the art.

The solutions according to the present application are described in detail in the foregoing, specific examples are used herein to elaborate principles and implementations of the present application, and descriptions of the foregoing embodiments are used merely for helping understand the method and a core idea of the present application. Therefore, those of ordinary skill in the art may make modifications to the present application in terms of the specific implementations and the application scope according to the idea of the present application. Based on the above, the content of this specification shall not be construed as a limitation on the present application.

## Claims

1. A neural network model for image segmentation, comprising: a feature extraction module, an intelligent selection module, an up-sampling module and a classification module, wherein the intelligent selection module comprises a feature extraction unit, a normalization unit, an intelligent selection unit, and an output unit;
the feature extraction module is configured to extract an original feature map of a target image;
the feature extraction unit is configured to perform feature extraction on the original feature map of the target image by using multi-scale dilated convolution, and splice a plurality of feature maps extracted to obtain an output feature map of the feature extraction unit;
the normalization unit is configured to normalize and non-linearly map the output feature map of the feature extraction unit to obtain an output feature map of the normalization unit;
the intelligent selection unit is configured to determine a first weight value of each channel in the output feature map of the normalization unit, the first weight value being configured to represent a contribution of the channel to accuracy of image segmentation; screen a preset number of target channels with maximum first weight values from the output feature map of the normalization unit; and weight the target channels according to the first weight value to obtain an output feature map of the intelligent selection unit;
the output unit is configured to add the output feature map of the intelligent selection unit and the original feature map of the target image to obtain a target feature map;
the up-sampling module is configured to up-sample the target feature map; and
the classification module is configured to generate an image segmentation result of the target image according to a feature map obtained by up-sampling.

2. The neural network model for image segmentation according to claim 1, wherein the intelligent selection unit is specifically configured to: screen the preset number of target channels with the maximum first weight values from the output feature map of the normalization unit; linearly weight the first weight value of each target channel according to a pre-trained global weighted value to obtain a second weight value of the target channel; and weight the target channel according to the second weight value to obtain the output feature map of the intelligent selection unit.

3. The neural network model for image segmentation according to claim 1, wherein the intelligent selection module comprises a down-sampling intelligent selection module, and an intelligent selection unit of the down-sampling intelligent selection module is configured to screen a first preset number of target channels with maximum first weight values from the output feature map of the normalization unit, wherein the first preset number is a number determined according to a convolution step and a number of channels of the original feature map of the target image.

4. The neural network model for image segmentation according to claim 3, wherein the intelligent selection module comprises a feature-retention intelligent selection module, and an intelligent selection unit of the feature-retention intelligent selection module is configured to screen a second preset number of target channels with maximum first weight values from the output feature map of the normalization unit, wherein the second preset number is equal to the number of channels of the original feature map of the target image.

5. The neural network model for image segmentation according to claim 1, wherein the intelligent selection unit is specifically configured to: sequentially perform an average pooling operation, a full connection operation, a non-linear mapping operation, a full connection operation, and a normalization operation on the output feature map of the normalization unit to obtain the first weight value of each channel in the output feature map of the normalization unit.

6. The neural network model for image segmentation according to any one of claims 1 to 5, comprising a plurality of intelligent selection modules mutually connected in series.

7. The neural network model for image segmentation according to claim 6, wherein the feature extraction module comprises a first feature extraction module and a second feature extraction module, and the intelligent selection module comprises a first intelligent selection module and a second intelligent selection module; and
the first feature extraction module is connected in series to a first preset number of first intelligent selection modules mutually connected in series, and the second feature extraction module and the first intelligent selection module are outputted, through a connection module, to a second preset number of second intelligent selection modules mutually connected in series.

8. An image segmentation method, implemented based on the neural network model for image segmentation according to any one of claims 1 to 7, comprising:
acquiring a target image to be segmented; and
inputting the target image to the neural network model to obtain an image segmentation result.

9. An image segmentation device, comprising:
a memory configured to store a computer program; and
a processor configured to execute the computer program to perform the image segmentation method according to claim 8.

10. A readable storage medium, wherein the readable storage medium is configured to store a computer program, and the computer program, when executed by a processor, performs the image segmentation method according to claim 8.
